# EUROPÄISCHE PATENTSCHRIFT

(11) **EP 4 005 341 B1**
(45) Veröffentlichungstag und Bekanntmachung des Hinweises auf die Patenterteilung: **26.07.2023**
(21) Anmeldenummer: 20737157.6
(22) Anmeldetag: 06.07.2020
(51) Int. Cl.: H05B 3/26

(54) **INDUKTIVE FLÄCHENHEIZUNG**
INDUCTIVE PANEL HEATING
CHAUFFAGE PLAN À INDUCTION

(30) Priorität: 24.07.2019 DE 102019119964
(43) Veröffentlichungstag der Anmeldung: 01.06.2022
(73) Patentinhaber: SURTECO GmbH, 86647 Buttenwiesen (DE)
(72) Erfinder: KREMER, Christoph, 46286 Dorsten (DE); PETRAKIS, Jordanis, 42277 Wuppertal (DE); PACHOWIAK, Horst, 86672 Thierhaupten (DE); SCHUNCK, Stephan, 48151 Münster (DE)
(74) Vertreter: Andrejewski - Honke Patent- und Rechtsanwälte Partnerschaft mbB
(86) Internationale Anmeldenummer: PCT/EP2020/068983
(87) Internationale Veröffentlichungsnummer: WO 2021/013518

(56) Entgegenhaltungen:
- WO-A1-2004/099530
- WO-A1-2008/055535
- DE-A1-102011 101 356

## Beschreibung

Die Erfindung betrifft eine beheizbare Flächenverkleidung, zum Beispiel einen beheizbaren Bodenbelag, insbesondere für das Beheizen von Räumen in Gebäuden. Außerdem betrifft die Erfindung einen beheizbaren Boden-, Decken- oder Wandaufbau, insbesondere innerhalb eines Gebäudes, mit einer beheizbaren Flächenverkleidung bzw. einem beheizbaren Bodenbelag. Ferner betrifft die Erfindung ein Verfahren zum Herstellen eines solchen Aufbaus und eine Verkleidungsplatte, zum Beispiel Bodenbelagplatte für den Bodenbelag bzw. Bodenaufbau.

Im Vordergrund der Erfindung steht folglich die Beheizung von Böden in Räumen von Gebäuden, im Sinne einer Fußbodenheizung. Alternativ betrifft die Erfindung aber auch die Beheizung von Wänden/Decken bzw. die Beheizung von Räumen von Gebäuden über die Wände und/oder über die Decke.

Die in der Praxis eingesetzten Fußbodenheizungen arbeiten derzeit primär auf der Basis Warmwasser-führender Leitungen. Sie zeichnen sich durch eine ausreichende Energieeffizienz aus, sind aber nicht geeignet, Flächen in kurzer Zeit zu temperieren. Die wasserführenden Leitungen werden meist im Estrich verlegt, so dass zunächst der komplette Bodenaufbau aufgeheizt werden muss, bevor die Oberfläche des Fußbodens signifikant erwärmt wird.

Alternativ werden in der Praxis Heizmatten eingesetzt, die nach dem Prinzip der elektrischen Widerstandserwärmung arbeiten. Solche vorgefertigten Heizmatten werden z. B. bei einem Fliesenboden in den Fliesenkleber eingelegt oder bei einem Laminatboden unter dem Laminat verlegt. Auch bei diesem System besteht der Nachteil, dass der gesamte Bodenbelag (z. B. die Fliese oder das Laminat) erwärmt werden muss, bevor eine spürbare Temperaturänderung an der Oberfläche auftritt. Dieser Nachteil betrifft z. B. Laminatböden oder sogenannte LVT-Böden (Luxury Vinyl Tile), da die verwendeten Materialien eine verhältnismäßig geringe Wärmeleitfähigkeit aufweisen. Auch die "lose" Verlegung der Heizmatten und der Laminate führt aufgrund des schlechten Wärmeübergangs zu einer reduzierten Effizienz der elektrischen Flächenheizungen.

Elektrische Fußbodenheizungen sind z. B. aus DE 20 2017 106 881 U1 und der EP 2 530 389 A2 bekannt.

Aus der DE 10 2011 054 126 A1 kennt man eine Holzwerkstoffplatte als Raumeinrichtungsplatte mit integrierten elektrischen Leitern. Innerhalb der Materialstärke der Holzwerkstoffplatte verläuft der elektrische Leiter derart hinter einer Linie von Montagepunkten, dass er, quer zur Oberfläche der Raumeinrichtungsplatte gesehen, mit dieser Linie fluchtet. Im Vordergrund steht dabei die Versorgung im Innern von Möbeln mit elektrischer Energie, so dass über die Holzwerkstoffplatte Montagepunkte zur Verfügung gestellt werden. Dabei kann ohne direkte elektrische Kontaktierung durch die Verwendung von induktiv wirkenden Energieübertragungsbauteilen oder induktiv reagierenden Bauteilen wie Schalter, Dimmer oder dergleichen eine elektrische Anbindung erfolgen.

Ein alternatives Flächenheizsystem ist im Zusammenhang mit Fahrzeugen, z. B. für die Beheizung einer Flugzeugkabine, bekannt (vgl. DE 10 2011 101 356 A1). Das Flächenheizsystem weist ein beheizbares Flächenelement mit einer Tragstruktur auf, auf der eine leitfähige Schicht angeordnet ist, welche von einer Deckschicht vollständig abgedeckt ist. Ferner ist eine Induktionsspule vorgesehen, die von dem beheizbaren Flächenelement separat ausgeführt ist und mit einer Wechselspannungsquelle verbunden wird. Das beheizbare Flächenelement ist dazu eingerichtet, bei Beaufschlagung der Induktionsspule mit einer Wechselspannung einen Wirbelstrom innerhalb der leitfähigen Schicht zu erzeugen, der zur Erwärmung des Flächenelementes führt. Ein solches Fußbodenelement soll deutlich robuster sein als die bekannten Fußbodenelemente mit integrierter elektrischer Widerstandsheizung. Das Flächenheizsystem soll eine Verbesserung einer Integrität des Flächenelementes oder Heizdrähte ermöglichen, da beispielsweise Anschlüsse für Heizdrähte oder Heizfolien nicht oder nicht vollständig aus dem betreffenden Flächenelement nach außen geführt oder von außen zugänglich gemacht werden müssen. Da eine Verwendung von mechanischen Steckverbindungen für direkte elektrische Verbindungen für das Flächenheizsystem nicht notwendig ist, können beispielsweise auch vergleichsweise schwere Stecker und Buchsen entfallen. Das Flächenelement selbst soll von einer direkten Stromzufuhr unabhängig sein und die für die Heizfunktion benötigte leitfähige Schicht soll von äußeren Einflüssen abgeschirmt sein (vgl. DE 10 2011 101 356 A1).

Ausgehend von dem vorbekannten Stand der Technik liegt der Erfindung die Aufgabe zugrunde, eine Flächenverkleidung bzw. einen Bodenbelag, und einen Aufbau mit einer solchen Verkleidung zu schaffen, die eine schnelle Temperierung (zum Beispiel des Bodens) ermöglicht und sich vor allem durch einen einfachen Aufbau und eine einfache Montage bzw. Installation auszeichnet, und zwar insbesondere in Räumen von Gebäuden.

Zur Lösung dieser Aufgabe lehrt die Erfindung eine beheizbare Flächenverkleidung, zum Beispiel einen beheizbaren Bodenbelag, insbesondere für das Beheizen von Räumen in Gebäuden, bestehend aus zumindest
- mehreren vorgefertigten Verkleidungsplatten, zum Beispiel Bodenbelagplatten, die jeweils eine (untere) Trägerschicht und eine (obere) Dekorschicht sowie eine dazwischen angeordnete Heizschicht aufweisen,
- und zumindest einer unter den Verkleidungsplatten, zum Beispiel Bodenbelagplatten verlegbaren Induktionsspule mit der in der Heizschicht durch Induktion ein Wirbelstrom zur Erwärmung der Heizschicht erzeugbar ist,
wobei die Induktionsspule unter Bildung einer bahnförmigen (und besonders bevorzugt aufrollbaren) Induktionsmatte in eine Spulentragschicht integriert ist,
wobei die Fläche der Induktionsmatte ein Vielfaches der Fläche der Verkleidungsplatten (bzw. einer einzelnen Verkleidungsplatte), zum Beispiel Bodenbelagplatten beträgt (das heißt wesentlich größer als die einzelne Bodenbelagplatte ist), so dass im Zuge der Verlegung (des Bodenbelages) eine Vielzahl von Platten, zum Beispiel Bodenbelagplatten auf (oder an) einer (z. B. ausgerollten) Induktionsmatte verlegbar ist.

Erfindungsgemäß wird folglich zum Beispiel ein Bodenbelag zur Verfügung gestellt, der durch induktive Erwärmung eine einfache Aufheizung der Oberfläche des Bodenbelags mit besonders schnellen Aufheizzeiten ermöglicht. Dieses gelingt durch eine Trennung der Energieeinspeisung von der Wärmeerzeugung durch eine grundsätzlich bekannte induktive Erwärmung. Denn erfindungsgemäß enthalten die vorgefertigten Bodenbelagplatten keine stromführenden Elemente, sondern diese sind in Form von Induktionsspulen unterhalb der Bodenbelagplatten angeordnet, und zwar erfindungsgemäß in Form von bahnförmigen Induktionsmatten, die bevorzugt aufrollbar sind, so dass die stromführenden Induktionsmatten eine wesentlich größere Fläche aufweisen, als die einzelnen Bodenbelagplatten, so dass im Zuge der Verlegung des Bodenbelages eine Vielzahl von Bodenbelagplatten auf der ausgerollten Induktionsmatte verlegt werden. Im Zuge der Montage bzw. Verlegung werden folglich zunächst die bahnförmigen Induktionsmatten verlegt, z. B. auf einem vorbereiteten Untergrund (z. B. Estrich). Darauf können anschließend in grundsätzlich bekannter Weise Bodenbelagplatten (z. B. Laminatplatten, LVT-Platten oder dergleichen) verlegt werden, in welche keine stromführenden Leitungen, sondern lediglich eine Heizschicht integriert ist, in welcher durch Induktion ein Wirbelstrom erzeugt wird und damit eine Erwärmung der Heizschicht erfolgt. Die Heizschicht wird folglich in herkömmliche Bodenbelagplatten integriert, die sich in bekannter Weise sehr einfach verlegen lassen, ohne dass eine elektrische Kontaktierung zwischen den einzelnen Elementen erforderlich ist. Denn auch wenn die Heizschicht bevorzugt als elektrisch leitfähige Schicht ausgebildet ist, muss kein elektrischer Kontakt zwischen den Heizschichten der einzelnen Bodenbelagplatten realisiert werden, da die Beheizung durch Induktion über die darunter angeordnete Induktionsspule erfolgt. Die erfindungsgemäße Ausgestaltung hat gegenüber bekannten Widerstandsbeheizungen den Vorteil, dass sich die Heizschicht besonders oberflächennah in die Bodenbelagplatte (z. B. Laminatplatte) integrieren lässt, ohne dass dieses auch eine Kontaktierung in diesem oberflächennahen Bereich erforderlich macht. Besonders bevorzugt lässt sich der beheizbare Bodenbelag in Räumen von Gebäuden einsetzen, in denen kurzfristig eine schnelle Beheizung des Bodens erfolgen soll, z. B. in Badezimmern oder dergleichen. Dabei liegt es auch im Rahmen der Erfindung eine solche Fußbodenheizung zusätzlich zu herkömmlichen Wandheizungen in Räumen einzusetzen, so dass die Raumheizung über die übliche Wandheizung erfolgen kann, während die erfindungsgemäße Fußbodenheizung in erster Linie der Vermeidung von "fußkalten" Böden dient. Insofern besteht die Möglichkeit, über das System lediglich eine verhältnismäßig geringe Temperierung der Oberfläche des Bodenbelages auf ein angenehmes Niveau von z. B. 20 °C bis 30 °C zu realisieren. Alternativ kann über eine höhere Energieeinbringung aber auch eine Beheizung des Raumes selbst realisiert werden.

Von besonderer Bedeutung ist die Trennung der Energieeinspeisung (über die Induktionsspule) von der Wärmeerzeugung in der Heizschicht. Die Heizschicht ist so ausgebildet, dass durch Induktion ein Wirbelstrom in der Heizschicht erzeugbar ist und damit eine Erwärmung der Heizschicht erfolgt. Dieses lässt sich dadurch realisieren, dass die Heizschicht aus einem elektrisch leitfähigen Material besteht oder ein elektrisches leitfähiges Material aufweist. So kann die in die Bodenbelag integrierte Heizschicht z. B. als elektrisch leitfähige Folie, z. B. als Metallfolie ausgebildet sein, die oberflächennah in die Bodenbelagplatte integriert ist, und zwar zwischen der unteren Trägerschicht und der oberen Dekorschicht. Alternativ kann die Heizschicht aber auch im Sinne einer Verbundschicht aus mehreren Komponenten bestehen und ein elektrisch leitfähiges Material aufweisen. So kann die Heizschicht z. B. eine Basisschicht aufweisen (z. B. aus Papier und/oder Kunststoff), die mit dem elektrisch leitfähigen Material beschichtet oder bedruckt ist. Die Heizschicht kann folglich durch Bedruckung oder Beschichtung eines Papiers realisiert werden. Ergänzend kann die Heizschicht eine Imprägnierung aufweisen, die nach der Bedruckung oder Beschichtung aufgebracht wird. Alternativ kann die Basisschicht aber auch mit einer elektrisch leitfähigen bzw. elektrisch modifizierten Imprägnierung versehen sein. Im Übrigen muss die Heizschicht nicht vollflächig elektrisch leitfähig sein, sondern es kann auch ausreichen, lediglich eine partielle elektrische Leitfähigkeit zu realisieren, indem z. B. in dem Material der Heizschicht elektrisch leitfähige Partikel verteilt sind. Stets ist es jedoch erforderlich, dass sich in der Heizschicht Wirbelströme ausbilden können, um durch Induktion Wärme zu erzeugen. Jedenfalls ist die Heizschicht oberflächennah in die vorgefertigten Bodenbelagplatten integriert, das heißt sie wird bereits bei der Herstellung der Bodenbelagplatten in diese integriert.

In besonders bevorzugter Weiterbildung ist das elektrisch leitfähige Material der Heizschicht bzw. in der Heizschicht nicht nur elektrisch leitfähig, sondern außerdem ferromagnetisch. Dieses führt zu einer besonders effektiven Energieeinkopplung durch die ausgeprägte Ausbildung von Wirbelströmen in dem ferromagnetischen Material. Denn zusätzlich zu der Ausbildung von Wirbelströmen treten in ferromagnetischen Stoffen (unterhalb der Curie-Temperatur) auch Ummagnetisierungsverluste auf, die zu einer besonders effizienten Erwärmung der Heizschicht führen. Dabei soll die Heizschicht zwar grundsätzlich elektrisch leitfähig sein, um Wirbelströme zu ermöglichen. Die Leitfähigkeit sollte jedoch verhältnismäßig gering sein und in jedem Fall deutlich geringer als die Leitfähigkeit der Induktionsspule. Erfindungsgemäß ist die (elektrisch leitende) Induktionsspule in eine Spulentragschicht integriert, so dass insgesamt eine bahnförmige und bevorzugt aufrollbare Induktionsmatte zur Verfügung steht. Diese Matte ist mit entsprechenden elektrischen Anschlüssen für den Anschluss der Induktionsspule an eine Energieversorgungseinrichtung ausgerüstet, wobei z. B. eine Wechselspannungsquelle verwendet wird. Die Induktionsmatte kann dabei zugleich Dämpfungseigenschaften aufweisen und folglich als Dämpfungsmatte ausgebildet sein, insbesondere als Trittschalldämpfungsmatte. Insofern kann die Induktionsspule in herkömmliche Trittschallmaterialien bzw. -matten integriert werden. Alternativ kann die Induktionsmatte aber auch zusätzlich zu einer herkömmlichen Dämpfungsmatte versehen werden, indem sie z. B. auf einer herkömmlichen Dämpfungsmatte verlegt wird.

Erfindungsgemäß werden als Bodenbelagplatten vorgefertigte Platten verwendet. Besonders bevorzugt handelt es sich um vorgefertigte Verbundplatten, die an den Plattenrändern Verbindungselemente für eine formschlüssige Verbindung zweier nebeneinander auf der Induktionsmatte verlegter Bodenbelagplatten aufweisen. Die Bodenbelagplatten können folglich in herkömmlicher Weise verlegt werden, wobei es zwischen den einzelnen Bodenbelagplatten lediglich auf eine mechanische bzw. formschlüssige Verbindung und gegebenenfalls auf eine zusätzliche stoffschlüssige Verbindung, z. B. Verklebung ankommt, ohne dass eine elektrische Kontaktierung zwischen den einzelnen Bodenbelagplatten erforderlich ist.

Besonders bevorzugt lässt sich die erfindungswesentliche Heizschicht in einen klassischen Aufbau bekannter Bodenbelagplatten integrieren. Denn diese sind zumeist ohnehin als Vielschichtaufbau realisiert, so dass im Zuge der Herstellung eine Heizschicht ohne weiteres in den Schichtaufbau integriert werden kann, ohne dass dadurch der Herstellungsprozess der Bodenbelagplatte wesentlich verändert wird. So kann die Heizschicht z. B. als aufrollbare bzw. aufwickelbare Heizschicht zur Verfügung stehen und dann im Herstellungsprozess - so wie die anderen Schichten des Plattenaufbaus eingesetzt und integriert werden.

Die Bodenbelagplatte kann z. B. als Laminatplatte (z. B. auf Holzwerkstoffbasis) ausgebildet sein. Eine solche Laminatplatte weist zumindest eine (untere) Trägerschicht (aus einem Holzwerkstoff z. B. HDF) mit einer Dicke von z. B. 1 mm bis 10 mm auf, wobei diese Trägerschicht bevorzugt an den Plattenrändern mit den Verbindungselementen für eine formschlüssige Verbindung zweiter nebeneinander verlegter Bodenbelagplatten ausgerüstet ist. Über der Trägerschicht ist eine Dekorschicht vorgesehen, z. B. ein bedrucktes Dekorpapier, welches eine Dicke von weniger als 2 mm, vorzugsweise weniger als 1 mm aufweist. Ferner ist über der Dekorschicht bevorzugt eine transparente Schutzschicht (overlay) vorgesehen, die eine Dicke von weniger als 1 mm aufweist. Erfindungsgemäß ist die Heizschicht zwischen der unteren Trägerschicht und der oberen Dekorschicht angeordnet, besonders bevorzugt unmittelbar unterhalb der Dekorschicht. Auf diese Weise wird eine besonders oberflächennahe Beheizung der Bodenplatte ermöglicht, ohne dass das optische Erscheinungsbild beeinträchtigt wird. Im Übrigen kann auf der Unterseite der Trägerschicht in grundsätzlich bekannter Weise eine weitere Schicht, ein sogenannter Gegenzug, angeordnet sein. Sämtliche Schichten werden im Zuge der Herstellung der Bodenbelagplatte unter Verwendung von Bindemitteln, Hitze und/oder Druck miteinander verbunden. Dabei kann auf herkömmliche Herstellungsprozesse zurückgegriffen werden, da lediglich die Einbindung einer zusätzlichen Schicht ohne sonstige Beeinflussung des Herstellungsprozesses erfolgt.

Alternativ kann die Bodenbelagplatte auch als Kunststoff-Verbundplatte ausgebildet sein, z. B. als sogenannte LVT-Platte ("Luxury Vinyl Tile"). Es handelt sich um eine Bodenplatte aus Polyvinylchlorid bzw. auf Basis von Polyvinylchlorid, die eine einschichtige oder mehrschichtige Trägerschicht aus bzw. mit Vinyl bzw. PVC aufweist, wobei diese Trägerschicht auf Vinylbasis insgesamt eine Dicke von bevorzugt weniger als 5 mm aufweist. Darüber ist eine Dekorschicht, z. B. eine Dekorfolie, vorgesehen und auf der Dekorschicht ist bevorzugt eine transparente Nutzschicht angeordnet, die ebenfalls aus Vinyl bzw. aus PVC besteht und eine Dicke von z. B. weniger als 1 mm aufweist. Die erfindungswesentliche Heizschicht ist wiederum bevorzugt unterhalb der Dekorschicht, besonders bevorzugt unmittelbar unterhalb der Dekorschicht angeordnet. Sie ist folglich zwischen der Trägerschicht aus Vinyl und der Dekorschicht angeordnet. Alternativ kann die Heizschicht aber auch in den mehrschichtigen Vinylaufbau der Trägerschicht und folglich in die Trägerschicht selbst integriert sein.

Schließlich kann die Bodenbelagplatte auch als eine Vinyl-Holzwerkstoff-Verbundplatte ausgebildet sein. Solche sind als Vinylplatten ebenfalls bekannt, wobei bei diesen Ausführungsformen eine Vinyl- bzw. PVC-Schicht auf einer HDF-Schicht angeordnet ist. Oberhalb der Vinylschicht ist wiederum eine Dekorschicht angeordnet, wobei die Heizschicht in diesem Fall zwischen der Dekorschicht und der Vinylschicht oder alternativ auch zwischen der Holzwerkstoffschicht und der Vinylschicht angeordnet ist. Auch bei der Herstellung von Vinylplatten kann auf herkömmliche Herstellungsprozesse zurückgegriffen werden.

Die Erfindung betrifft nicht nur den beschriebenen Bodenbelag, der sich aus den vorgefertigten Bodenbelagplatten einerseits und der Induktionsmatte andererseits zusammensetzt, sondern auch einen Bodenaufbau unter Verwendung eines solchen Bodenbelages. Der Bodenaufbau weist einen tragenden Untergrund, z. B. einen Estrich auf und auf diesen tragenden Untergrund wird der beschriebene Bodenbelag verlegt, indem zunächst eine Induktionsmatte auf dem tragenden Untergrund verlegt wird, z. B. ausgerollt wird und wobei anschließend eine Vielzahl von Bodenbelagplatten auf der Induktionsmatte verlegt und bevorzugt jeweils formschlüssig und/oder stoffschlüssig miteinander verbunden werden. Die in die Induktionsmatte integrierte Induktionsspule oder die mehreren Induktionsspulen werden mit einer oder mehreren Energieversorgungseinrichtungen, z. B. mit einer Wechselspannungsquelle, kontaktiert, und zwar bevorzugt nach dem Verlegen der Induktionsmatte jedoch vor dem Verlegen der Bodenbelagplatten. Besonders bevorzugt handelt es sich bei der Induktionsmatte um eine flexible Matte. Optional kann diese metallisiert sein, eine gedruckte Elektronik beinhalten oder verlegte, angeordnete Leiterbahnen (zum Beispiel als Wickelstruktur).

Der Bodenaufbau kann im Übrigen zusätzlich eine Dämpfungsmatte, z. B für eine Trittschalldämmung aufweisen. Dabei kann auf bekannte Produkte zurückgegriffen werden, so dass die Induktionsmatte nach dem Verlegen der Trittschalldämmung auf der Trittschalldämmung verlegt wird. Alternativ kann die Induktionsmatte selbst als Dämpfungsmatte ausgebildet und folglich mit Dämpfungseigenschaften ausgerüstet sein. Die Induktionsspule bzw. Induktionsmatte kann sich folglich in herkömmliche Dämpfungsmaterialien integrieren lassen.

Mit dem erfindungsgemäßen Bodenbelag bzw. erfindungsgemäßen Bodenaufbau gelingt eine Erzeugung der Wärme direkt im Bereich der Oberfläche des Bodenbelags, und zwar mit kurzen Aufheizzeiten, so dass die Temperatur an der Oberfläche bei Bedarf schnell und flexibel erhöht werden kann. Aufgrund der sehr kurzen Aufheizzeiten ist das System insbesondere für Bereiche interessant, die nur zeitweise und z. B. nur zu bestimmten Tageszeiten temperiert werden sollen. Da die Heizzeit gering ist und die Temperatur sofort oberflächenwirksam wird, lässt sich dieses auch mit geringem Energieverbrauch realisieren. Bei den herkömmlichen System, die auf einer Widerstandsbeheizung beruhen, dienen der Estrich oder der Fliesenkleber als sogenannte Lastverteilschicht der gleichmäßigen Verteilung der Wärmeenergie über die Fläche. Diese Funktion ist bei dem erfindungsgemäßen System nicht mehr erforderlich, das heißt es muss keine Wärmeverteilung über den Untergrund erfolgen, sondern die Wärme wird unmittelbar oberflächennah erzeugt. Insbesondere bei herkömmlichen Bodenbelägen, z. B. Laminaten oder LVT-Böden bietet das System den Vorteil, dass die Temperatur oberflächennah erzeugt wird. Die verhältnismäßig geringe Wärmeleitfähigkeit des Laminates selbst wirkt sich folglich nicht negativ auf die Temperierung aus. Durch die Anordnung der stromführenden Schicht unter dem beschichteten Holzwerkstoff und nicht an der Oberfläche des Laminats ist diese vor Beschädigungen geschützt. Sollte trotzdem eine Bodenbelagplatte beschädigt sein, so hat dieses einen minimalen Einfluss auf die Funktionalität der Heizung, da der Schaden nur sehr lokal direkt an der beschädigten Stelle Wirkung zeigt.

Im Übrigen besteht die Möglichkeit, einen Raum einheitlich mit identischen Bodenbelagplatten mit integrierter Heizschicht auszurüsten und über die Ausgestaltung der Induktionsmatte die tatsächlich zu beheizenden Bereiche festzulegen. So kann z. B. in bestimmten Bereichen unterhalb der Bodenbelagplatten auf Induktionsspulen verzichtet werden, wenn an diesen Stellen auf eine Beheizung verzichtet werden soll, z. B. unterhalb bestimmter Möbel oder Einrichtungen im Raum. Auf die Verwendung der Bodenbelagplatten selbst hat eine solche Aufteilung des Raums keinen Einfluss.

Die Erfindung betrifft schließlich ein Verfahren zum Herstellen eines beheizbaren Bodenaufbaus der beschriebenen Art. Außerdem wird die erfindungsgemäße Bodenbelagplatte auch selbständig unter Schutz gestellt.

Besondere Bedeutung hat die Verwendung der Bodenbelagplatten bzw. des Bodenbelags in Räumen von Gebäuden. Besonders interessant kann die Verwendung zusätzlich zu herkömmlichen Heizkörpern, z. B. zusätzlich zu Wandheizkörpern sein, um mit der Bodenheizung (lediglich) für eine angenehme Bodentemperatur zu sorgen, während die Beheizung des (gesamten) Raums über den herkömmlichen Heizkörper erfolgt.

Beispielhaft wurde die Erfindung in den vorstehenden Erläuterungen für eine beheizbare Flächenverkleidung in der Ausführungsform als beheizbarer Bodenbelag beschrieben. Die Erfindung betrifft jedoch gleichermaßen eine beheizbare Flächenverkleidung in der Ausführungsform als Wandverkleidung oder Deckenverkleidung, bei der die Verkleidungsplatten nicht als Bodenbelagplatten, sondern als zum Beispiel Wandverkleidungsplatten, zum Beispiel Wandpaneele ausgebildet sind. Die erfindungsgemäße, induktive Flächenheizung lässt sich folglich nicht nur bei einem Bodenaufbau, sondern auch bei einem Wandaufbau oder Deckenaufbau realisieren, wobei die Induktionsmatte zunächst an einem Untergrund, zum Beispiel an einer Wand oder Decke, verlegt wird und wobei anschließend eine Vielzahl von Wandverkleidungsplatten (zum Beispiel Möbelplatten) auf bzw. an der Induktionsmatte verlegt werden. Solche Wandverkleidungsplatten (oder Deckenverkleidungsplatten) können mit oder ohne formschlüssige Verbindung untereinander realisiert werden. Auch bei dieser Ausführungsform ist die erfindungswesentliche Heizschicht in die Verkleidungsplatte integriert, während die Induktionsmatte unabhängig davon hinter der Platte angeordnet ist. Insofern betrifft die Erfindung alternativ auch eine Verkleidungsplatte in der Ausführungsform als Wandverkleidungsplatte bzw. Wandpaneele, die ebenfalls eine Trägerschicht aus Holz oder einem Holzwerkstoff und eine Dekorschicht aufweisen kann, wobei zwischen der Trägerschicht und der Dekorschicht die Heizschicht angeordnet sein kann. Sämtliche vorstehenden Erläuterungen zu verschiedenen Varianten und Optionen der Erfindung beziehen sich folglich nicht nur auf einen beheizbaren Bodenbelag, sondern gleichermaßen auf eine beheizbare Wand- oder Deckenverkleidung, sodass die beschriebenen Bodenbelagplatten auch als Wand- oder Deckenverkleidungsplatten in identischer oder ähnlicher Ausgestaltung realisierbar sind.

Im Folgenden wird die Erfindung anhand von Zeichnungen näher erläutert, die lediglich Ausführungsbeispiele zeigen. Es zeigen:
- Fig. 1: einen erfindungsgemäßen Bodenaufbau mit einem erfindungsgemäßen Bodenbelag in einer vereinfachten perspektivischen Darstellung,
- Fig. 2: einen Vertikalschnitt durch den Gegenstand nach Fig. 1 und
- Fig. 3: beispielhaft eine erfindungsgemäße Bodenbelagplatte in einer perspektivischen Explosionsdarstellung.

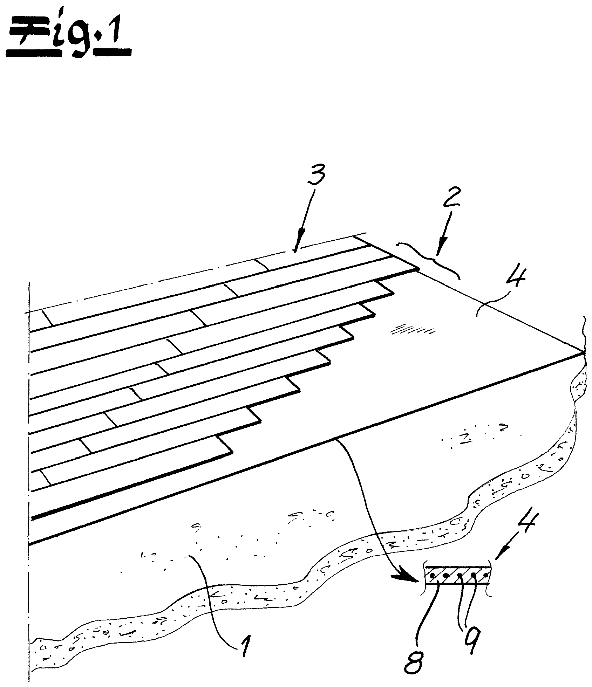

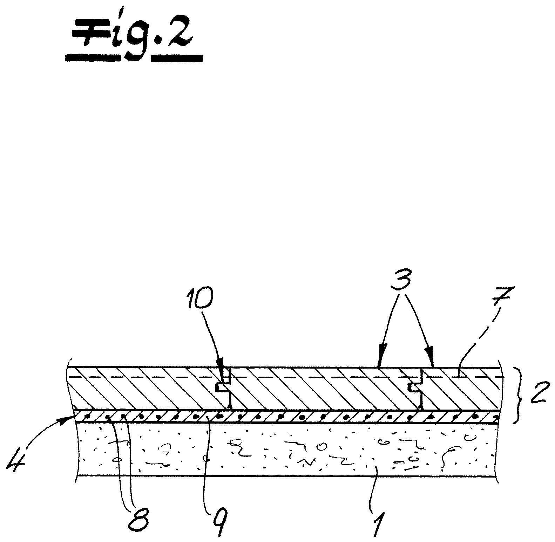

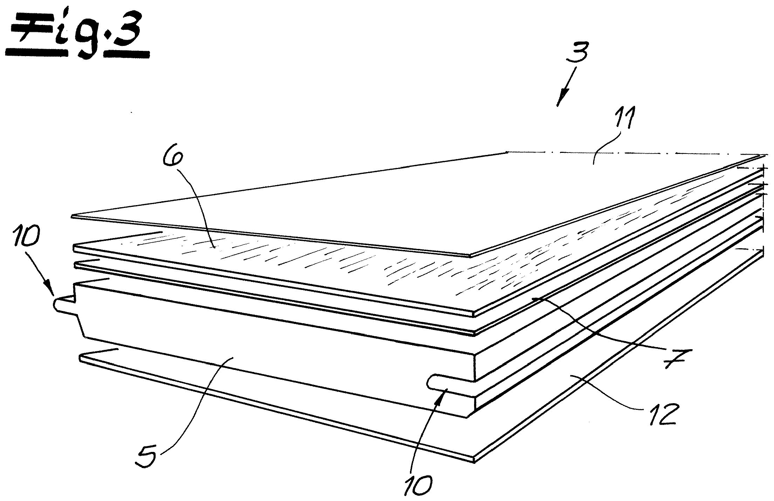

In den Figuren 1 und 2 ist ein Bodenaufbau innerhalb eines Gebäudes dargestellt, der einen tragenden Untergrund 1 (z. B. einem Estrich) und einem auf dem tragenden Untergrund angeordneten, beheizbaren Bodenbelag 2 aufweist. Der beheizbare Bodenbelag 2 besteht im Ausführungsbeispiel aus mehreren vorgefertigten Bodenbelagplatten 3 und einer unter den Bodenbelagplatten 3 und folglich auf dem Estrich 1 verlegten Induktionsmatte 4. Die Bodenbelagplatten 3 gemäß Fig. 3 weisen jeweils eine untere Trägerschicht 5 und eine obere Dekorschicht 6 sowie eine dazwischen angeordnete Heizschicht 7 auf. Die Induktionsmatte 4 weist zumindest eine Induktionsspule 8 auf, die unter Bildung der bahnförmigen Induktionsmatte 4 in eine Spulentragschicht 9 integriert ist. Diese Induktionsmatte 4 kann zugleich als Dämpfungsmatte insbesondere als Trittschalldämpfungsmatte ausgebildet sein, das heißt sie weist bevorzugt eine entsprechende Dicke auf und ist aus einem geeigneten Material zur Trittschalldämmung ausgebildet. Im Zuge der Montage bzw. Verlegung wird zunächst die Induktionsmatte 4 auf dem tragenden Untergrund 1 verlegt. Bevorzugt wird anschließend die Induktionsspule 8 mit einer nicht dargestellten Energieversorgungseinrichtung verbunden. Danach erfolgt die Verlegung der vorgefertigten Bodenbelagplatten 3 in grundsätzlich bekannter Weise, denn die Bodenbelagplatten 3 sind bevorzugt als vorgefertigte Verbundplatten ausgebildet, die an den Plattenrändern mit Verbindungselementen 10 ausgerüstet sind, mit denen eine formschlüssige Verbindung zweier nebeneinander auf der Induktionsmatte 4 verlegter Bodenbelagplatten 3 erfolgt.

Erfindungsgemäß wird mit dem durch die Induktionsspule 8 fließenden Strom, z. B. Wechselstrom, in der Heizschicht 7 durch Induktion ein Wirbelstrom erzeugt und dieser führt zur Erwärmung der Heizschicht 7. Erfindungsgemäß erfolgt folglich eine induktive Erwärmung der Bodenbelagplatten 3, und zwar innerhalb der oberflächennah integrierten Heizschicht 7. Besonders interessant ist dabei die Tatsache, dass die stromführenden Teile bzw. Leitungen nicht in die Bodenbelagplatten 3 integriert sind, sondern in die darunter verlegte Induktionsmatte 4. Dieses vereinfacht den Verlegeaufwand und zugleich erfolgt eine besonders oberflächennahe Beheizung des Bodenbelags. In die Bodenbelagplatten 3 sind zwar jeweils die Heizschichten 7 integriert, die bevorzugt auch aus einem elektrisch leitenden Material bestehen. Dabei ist jedoch keine elektrische Kontaktierung der einzelnen Heizschichten zwischen den einzelnen Bodenbelagplatten erforderlich.

Die Bodenbelagplatten 3 können so aufgebaut sein, wie herkömmliche Bodenbelagplatten, z. B. Verbundplatten. Dabei kann es sich z. B. um Laminatplatten auf Holzwerkstoffplatten oder um PVC- bzw. Vinyl-Platten handeln. Von den herkömmlichen Bodenbelagplatten unterscheiden sich die erfindungsgemäßen Bodenbelagplatten durch die integrierte Heizschicht 7, die eine induktive Erwärmung ermöglicht. Beispielhaft ist in Fig. 3 eine solche Bodenbelagplatte 3 in der Ausführungsform als Laminatplatte dargestellt. Die Laminatplatte 3 weist in grundsätzlich bekannter Weise eine Trägerschicht 5 aus einem Holzwerkstoff (z. B. aus einer Faserplatte, HDF oder MDF) auf. Ferner ist eine Dekorschicht 6 vorgesehen, z. B. ein bedrucktes Dekorpapier. Darauf ist optional eine Schutzschicht 11 (overlay) angeordnet. Unterhalb der Trägerschicht kann ein sogenannter Gegenzug 12 vorgesehen sein. Erfindungsgemäß ist zwischen der Trägerschicht 5 und der Dekorschicht 6 die Heizschicht 7, z. B. eine elektrisch leitende und gegebenenfalls ferromagnetische Heizschicht angeordnet. Diese kann z. B. als Metallfolie oder auch als Papier mit elektrisch leitender und/oder ferromagnetischer Beschichtung und gegebenenfalls anschließender Imprägnierung hergestellt sein. Jedenfalls lässt sich die erfindungswesentliche Heizschicht in einen klassischen Laminataufbau integrieren (vgl. Fig. 3).

In den Figuren wird die Erfindung lediglich beispielhaft anhand einer induktiven Fußbodenheizung beschrieben. Alternativ kann die induktive Flächenheizung auch für einen Wandaufbau bzw. für die Beheizung im Bereich einer Wand realisiert sein, wobei der Bodenaufbau in diesem Fall als Wandaufbau bezeichnet wird und die Bodenbelagplatten 3 als Wandverkleidungsplatten. Als Untergrund 1 dient in diesem Fall eine Wand, sodass die Verlegung bevorzugt in vertikaler Orientierung erfolgt. Sämtliche in der Figurenbeschreibung dargestellten Optionen gelten jedoch gleichermaßen für einen solchen beheizbaren Wandaufbau oder alternativ für einen nicht dargestellten Deckenaufbau.

## Patentansprüche

1. Beheizbare Flächenverkleidung, zum Beispiel beheizbarer Bodenbelag (2), insbesondere für das Beheizen von Räumen in Gebäuden, bestehend aus zumindest
- mehreren vorgefertigten Verkleidungsplatten (3), zum Beispiel Bodenbelagplatten (3), die jeweils eine Trägerschicht (5) und eine Dekorschicht (6) sowie eine dazwischen angeordnete Heizschicht (7) aufweisen,
- und zumindest einer unter den Verkleidungsplatten (3) verlegbaren Induktionsspule (8), mit der in der Heizschicht (7) durch Induktion ein Wirbelstrom zur Erwärmung der Heizschicht (7) erzeugbar ist,
**dadurch gekennzeichnet, dass** die Induktionsspule (8) unter Bildung einer bahnförmigen Induktionsmatte (4) in eine Spulentragschicht (9) integriert ist,
wobei die Fläche der Induktionsmatte (4) ein Vielfaches der Fläche der einzelnen Verkleidungsplatten, zum Beispiel Bodenbelagplatten (3) beträgt, so dass im Zuge der Verlegung der Flächenverkleidung, zum Beispiel des Bodenbelages eine Vielzahl von Verkleidungsplatten (3) auf einer Induktionsmatte (4) verlegt ist.

2. Flächenverkleidung nach Anspruch 1, **dadurch gekennzeichnet, dass** die Heizschicht (7) aus einem elektrisch leitfähigen Material besteht oder ein elektrisch leitfähiges Material aufweist.

3. Flächenverkleidung nach Anspruch 1 oder 2, **dadurch gekennzeichnet, dass** die Heizschicht (7) aus einem ferromagnetischen Material besteht oder ein ferromagnetisches Material aufweist.

4. Flächenverkleidung nach Anspruch 2 oder 3, **dadurch gekennzeichnet, dass** die Heizschicht (7) als elektrisch leitfähige und gegebenenfalls ferromagnetische Folie, z. B. als Metallfolie, ausgebildet ist.

5. Flächenverkleidung nach Anspruch 2 oder 3, **dadurch gekennzeichnet, dass** die Heizschicht (7) als Verbundschicht ausgebildet ist und eine Basisschicht aufweist, die mit elektrisch leitfähigem und gegebenenfalls ferromagnetischem Material beschichtet oder bedruckt ist.

6. Flächenverkleidung nach einem der Ansprüche 1 bis 5, **dadurch gekennzeichnet, dass** die Verkleidungsplatten, zum Beispiel Bodenbelagplatten (3), als vorgefertigte Verbundplatten mit an den Plattenrändern angeordneten Verbindungselementen (10) für eine formschlüssige Verbindung zweier nebeneinander auf der Induktionsmatte (4) verlegter Verkleidungsplatten (3) ausgebildet sind.

7. Flächenverkleidung nach einem der Ansprüche 1 bis 6, **dadurch gekennzeichnet, dass** die Verkleidungsplatten, zum Beispiel Bodenbelagplatten (3) als Laminatplatten oder als Kunststoffverbundplatten mit integrierter Heizschicht (7) ausgebildet sind.

8. Beheizbarer Bodenaufbau, Deckenaufbau oder Wandaufbau, insbesondere innerhalb eines Gebäudes, mit einer beheizbaren Flächenverkleidung, zum Beispiel einem beheizbaren Bodenbelag, nach einem der Ansprüche 1 bis 7,
mit einem Untergrund (1),
einer Induktionsmatte (4), die auf oder an dem Untergrund angeordnet ist, und mit einer Vielzahl von auf der Induktionsmatte (4) verlegten und bevorzugt jeweils formschlüssig und/oder stoffschlüssig miteinander verbundenen Verkleidungsplatten, zum Beispiel Bodenbelagplatten (3), Deckenverkleidungsplatten, Wandverkleidungsplatten oder Möbelplatten,
wobei die in die Induktionsmatte (4) integrierte Induktionsspule (8) mit einer Energieversorgungseinrichtung kontaktiert ist.

9. Boden- oder Wandaufbau nach Anspruch 8 **dadurch gekennzeichnet, dass** die Induktionsmatte (4) als Dämpfungsmatte, insbesondere als Trittschalldämpfungsmatte ausgebildet ist.

10. Boden- oder Wandaufbau nach Anspruch 8 oder 9, **dadurch gekennzeichnet, dass** zwischen Untergrund (1) und Induktionsmatte (4) eine zusätzliche Dämpfungsschicht, z. B. eine zusätzliche Trittschalldämmung, angeordnet ist.

11. Verfahren zum Herstellen eines beheizbaren Boden-, Decken- oder Wandaufbaues nach einem der Ansprüche 8 bis 10,
wobei auf oder an dem Untergrund (1) eine Induktionsmatte (4) verlegt, z. B. ausgerollt wird und
wobei anschließend eine Vielzahl von Verkleidungsplatten, zum Beispiel Bodenbelagplatten (3) oder Wandverkleidungsplatten, auf der Induktionsmatte (4) verlegt und bevorzugt jeweils formschlüssig und/oder stoffschlüssig miteinander verbunden werden.

12. Verfahren nach Anspruch 11, wobei die Induktionsspule (8) der Induktionsmatte (4) mit einer Energieversorgungseinrichtung, z. B. einer Wechselspannungsquelle, verbunden wird, bevorzugt vor dem Verlegen der Verkleidungsplatten (3).

13. Verkleidungsplatte, zum Beispiel Bodenbelagplatte (3), für eine beheizbare Flächenverkleidung, zum Beispiel für einen beheizbaren Bodenbelag (2), nach einem der Ansprüche 1 bis 7 und/oder für einen beheizbaren Boden- oder Wandaufbau nach einem der Ansprüche 8 bis 10, welche eine Gesamtdicke von weniger als 20 mm aufweist, vorzugsweise weniger als 15 mm,
mit einer Trägerschicht (5) mit einer Dicke von 1 mm bis 15 mm, vorzugsweise 1 mm bis 10 mm, die bevorzugt an den Plattenrändern mit Verbindungselementen (10) für eine formschlüssige Verbindung zweier nebeneinander verlegter Verkleidungsplatten (3) aufweist,
und mit einer Dekorschicht (6), welche eine Dicke von weniger als 2 mm aufweist sowie optional einer transparenten Schutzschicht (11), die eine Dicke von weniger als 1 mm aufweist,
wobei zwischen der unteren Trägerschicht (5) und der oberen Dekorschicht (6) die Heizschicht (7) angeordnet ist.

14. Bodenbelagplatte nach Anspruch 13 in der Ausführungsform als Laminatplatte,
mit einer Trägerschicht (5) aus Holz oder einem Holzwerkstoff mit einer Dicke von 2 mm bis 12 mm, z. B. 2 mm bis 9 mm, wobei die Trägerschicht aus Holz oder einem Holzwerkstoff bevorzugt mit den randseitigen Verbindungselementen (10) versehen ist,
und mit einer Dekorschicht (6) aus Papier und/oder Kunststoff, welche eine Dicke von weniger als 2 mm aufweist,
sowie optional mit einer transparenten Schutzschicht (11) mit einer Dicke von weniger als 1 mm.

15. Bodenbelagplatte nach Anspruch 13 in der Ausführungsform als Kunststoffverbundplatte, insbesondere als Vinylplatte, welche eine Gesamtdicke von weniger als 10 mm aufweist,
mit einer einschichtigen oder mehrschichtigen Trägerschicht aus oder mit Vinyl, die eine Dicke von weniger als 5 mm aufweist und
mit einer Dekorschicht,
sowie optional mit einer transparenten Schutz- und/oder Nutzschicht aus oder mit Vinyl,
wobei die Heizschicht unter der Dekorschicht, bevorzugt zwischen Trägerschicht und Dekorschicht angeordnet ist.

## Claims

1. A heatable surface covering, for example heatable floor covering (2), in particular for heating rooms in buildings, consisting of at least
- multiple prefabricated covering panels (3), for example floor covering panels (3), each having a substrate layer (5) and a decorative layer (6) and a heat layer (7) arranged therebetween,
- and at least one induction coil (8) which can be laid under the covering panels (3) and with which an eddy current for heating the heat layer (7) can be generated in the heat layer (7) by means of induction,
**characterized in that** the induction coil (8) is integrated into a coil carrier layer (9) and forms a web-type induction mat (4),
wherein the surface of the induction mat (4) is a multiple of the surface of the individual covering panels, for example floor covering panels (3), so that in the course of laying the surface covering, for example the floor covering, a plurality of covering panels (3) is laid on an induction mat (4).

2. The surface covering according to claim 1, **characterized in that** the heat layer (7) consists of an electrically conductive material or comprises an electrically conductive material.

3. The surface covering according to claim 1 or 2, **characterized in that** the heat layer (7) consists of a ferromagnetic material or comprises a ferromagnetic material.

4. The surface covering according to claim 2 or 3, **characterized in that** the heat layer (7) is designed as an electrically conductive and optionally ferromagnetic foil, e.g. as a metal foil.

5. The surface covering according to claim 2 or 3, **characterized in that** the heat layer (7) is designed as a composite layer and has a base layer which is coated or printed with electrically conductive and optionally ferromagnetic material.

6. The surface covering according to any one of claims 1 to 5, **characterized in that** the covering panels, for example floor covering panels (3), are designed as prefabricated composite panels with connecting elements (10) arranged on the panel edges for a form-fitting connection of two covering panels (3) laid next to one another on the induction mat (4).

7. The surface covering according to any one of claims 1 to 6, **characterized in that** the covering panels, for example floor covering panels (3), are designed as laminate panels or as plastic composite panels with an integrated heat layer (7).

8. A heatable floor structure, ceiling structure or wall structure, in particular within a building, with a heatable surface covering, for example a heatable floor covering, according to any one of claims 1 to 7,
with a subfloor (1),
an induction mat (4) arranged on or at the subfloor, and with a plurality of covering panels, for example floor covering panels (3), ceiling covering panels, wall covering panels or furniture panels, which are laid on the induction mat (4) and are preferably in each case connected to one another in a form-fitting and/or firmly bonding manner, wherein the induction coil (8) integrated in the induction mat (4) is in contact with a power supply device.

9. The floor or wall structure according to claim 8, **characterized in that** the induction mat (4) is designed as a damping mat, in particular as an impact sound damping mat.

10. The floor or wall structure according to claim 8 or 9, **characterized in that** an additional damping layer, e.g. an additional impact sound insulation, is arranged between the subfloor (1) and the induction mat (4).

11. A method for producing a heatable floor, ceiling or wall structure according to any one of claims 8 to 10, wherein an induction mat (4) is laid, e.g. rolled out, on or at the subfloor (1) and wherein subsequently a plurality of covering panels, for example floor covering panels (3) or wall covering panels, are laid on the induction mat (4) and are preferably connected to one another in each case in a form-fitting and/or firmly bonding manner.

12. The method according to claim 11, wherein the induction coil (8) of the induction mat (4) is connected to a power supply device, e.g. an AC voltage source, preferably before the covering panels (3) are laid.

13. A covering panel, for example a floor covering panel (3), for a heatable surface covering, for example for a heatable floor covering (2), according to any one of claims 1 to 7 and/or for a heatable floor or wall structure according to any one of claims 8 to 10, which has an overall thickness of less than 20 mm, preferably less than 15 mm, with a substrate layer (5) having a thickness of 1 mm to 15 mm, preferably 1 mm to 10 mm, which preferably has connecting elements (10) at the panel edges for a form-fitting connection of two covering panels (3) laid next to one another, and with a decorative layer (6) which has a thickness of less than 2 mm and optionally with a transparent protective layer (11) which has a thickness of less than 1 mm, wherein the heat layer (7) is arranged between the lower substrate layer (5) and the upper decorative layer (6).

14. The floor covering panel according to claim 13 in the embodiment as a laminate panel,
with a substrate layer (5) of wood or a wood-based material having a thickness of 2 mm to 12 mm, e.g. 2 mm to 9 mm, wherein the substrate layer of wood or a wood-based material is preferably provided with the edge-side connecting elements (10),
and with a decorative layer (6) of paper and/or plastics, which has a thickness of less than 2 mm,
and optionally with a transparent protective layer (11) having a thickness of less than 1 mm.

15. The floor covering panel according to claim 13 in the embodiment as a plastic composite panel, in particular as a vinyl panel, which has a total thickness of less than 10 mm,
with a single-layer or multi-layer substrate layer of or including vinyl, which has a thickness of less than 5 mm, and
with a decorative layer,
and optionally with a transparent protective and/or wear layer of or including vinyl,
wherein the heat layer is arranged under the decorative layer, preferably between the substrate layer and the decorative layer.

## Revendications

1. Revêtement de surface pouvant être chauffé, par exemple revêtement de sol pouvant être chauffé (2), en particulier pour chauffer des pièces dans des bâtiments, composé d'au moins
- plusieurs plaques de revêtement préfabriquées (3), par exemple des plaques de revêtement de sol (3), qui présentent respectivement une couche porteuse (5) et une couche décorative (6), ainsi qu'une couche chauffante (7) disposée entre elles,
- et au moins une bobine d'induction (8) pouvant être posée sous les plaques de revêtement (3) et grâce à laquelle, par induction, un flux tourbillonnant peut être généré dans la couche chauffante (7) pour réchauffer la couche chauffante (7),
**caractérisé en ce que** la bobine d'induction (8) est intégrée en formant un tapis d'induction en forme de bande (4) dans une couche support de bobine (9),
la surface du tapis d'induction (4) représentant plusieurs fois la surface des plaques de revêtement individuelles, par exemple des plaques de revêtement de sol (3), de sorte que, au cours de la pose du revêtement de surface, par exemple du revêtement de sol, une multitude de plaques de revêtement (3) sont posées sur un tapis à induction (4).

2. Revêtement de surface selon la revendication 1, **caractérisé en ce que** la couche chauffante (7) est composée d'un matériau conducteur électrique ou présente un matériau conducteur électrique.

3. Revêtement de surface selon la revendication 1 ou 2, **caractérisé en ce que** la couche chauffante (7) est composée d'un matériau ferromagnétique ou présente un matériau ferromagnétique.

4. Revêtement de surface selon la revendication 2 ou 3, **caractérisé en ce que** la couche chauffante (7) est réalisée sous forme d'un film conducteur électrique et éventuellement ferromagnétique, par exemple sous forme d'un film métallique.

5. Revêtement de surface selon la revendication 2 ou 3, **caractérisé en ce que** la couche chauffante (7) est réalisée sous forme d'une couche composite et présente une couche de base qui est revêtue ou imprimée avec du matériau conducteur et éventuellement ferromagnétique.

6. Revêtement de surface selon une des revendications 1 à 5, **caractérisé en ce que** les plaques de revêtement, par exemple les plaques de revêtement de sol (3), sont réalisées sous forme de plaques composites préfabriquées avec des éléments de raccordement (10) disposés aux bords des plaques pour une connexion par correspondance géométrique de deux plaques de revêtement (3) posées l'une près de l'autre sur le tapis d'induction (4).

7. Revêtement de surface selon une des revendications 1 à 6, **caractérisé en ce que** les plaques de revêtement, par exemple les plaques de revêtement de sol (3), sont réalisées sous forme de plaques laminées ou de plaques laminées en matière plastique avec une couche chauffante intégrée (7).

8. Structure de sol, structure de plafond ou structure de mur pouvant être chauffée, en particulier à l'intérieur d'un bâtiment, comportant un revêtement de surface, par exemple un revêtement de sol pouvant être chauffé, selon une des revendications 1 à 7,
et comportant une base (1),
un tapis d'induction (4) qui est déposé sur ou au niveau de la base, et une multitude de plaques de revêtement, par exemple des plaques de revêtement de sol (3), des plaques de revêtement de plafond, des plaques de revêtement de mur ou des plaques de mobilier, posées sur le tapis d'induction (4) et de préférence respectivement connectées les unes aux autres par correspondance géométrique et/ou par correspondance de matière, la bobine d'induction (8) intégrée dans le tapis d'induction (4) étant mise en contact avec un dispositif d'alimentation en énergie.

9. Revêtement de sol ou de mur selon la revendication 8, **caractérisé en ce que** le tapis d'induction (4) se présente sous forme d'un tapis d'amortissement, en particulier d'un tapis d'amortissement de pas.

10. Revêtement de sol ou de mur selon la revendication 8 ou 9, **caractérisé en ce que**, entre la base (1) et le tapis d'induction (4), une couche d'amortissement supplémentaire, par exemple un amortisseur de pas supplémentaire, est disposée.

11. Procédé de fabrication d'une structure de sol, de plafond ou de mur pouvant être chauffée selon une des revendications 8 à 10, dans lequel, sur ou au niveau de la base (1), un tapis d'induction (4) est posé, par exemple déroulé, et ensuite, une multitude de plaques de revêtement, par exemple des plaques de revêtement de sol (3) ou des plaques de revêtement de mur, sont 34 sur le tapis d'induction (4) et sont respectivement connectées de préférence entre elles par correspondance géométrique et/ou par correspondance de matière.

12. Procédé selon la revendication 11, dans lequel la bobine d'induction (8) du tapis d'induction (4) est connectée à un dispositif d'alimentation en énergie, par exemple une source de courant alternatif, de préférence avant la pose des plaques de revêtement (3).

13. Plaque de revêtement, par exemple plaque de revêtement de sol (3) pour revêtement de surface pouvant être chauffé, par exemple pour revêtement de sol pouvant être chauffé (2), selon une des revendications 1 à 7 et/ou pour structure de sol ou de mur pouvant être chauffée selon une des revendications 8 à 10, qui présente une épaisseur totale de moins de 20 mm, de préférence moins de 15 mm, comportant une couche porteuse (5) ayant une épaisseur de 1 mm à 15 mm, de préférence 1 mm à 10 mm, qui présente de préférence, aux bords de la plaque, des éléments de connexion (10) pour une connexion par correspondance géométrique de deux plaques de revêtement posées l'une à côté de l'autre (3), et une couche décorative (6) qui présente une épaisseur de moins de 2 mm et, en option, une couche protectrice transparente (11) qui présente une épaisseur de moins de 1 mm, la couche chauffante (7) étant disposée entre la couche porteuse inférieure (5) et la couche décorative supérieure (6).

14. Plaque de revêtement de sol selon la revendication 13 dans la forme de réalisation sous forme de plaque laminée,
comportant une couche porteuse (5) en bois ou en matériau à base de bois d'une épaisseur de 2 mm à 12 mm, par exemple 2 mm à 9 mm, la couche porteuse en bois ou en matériau à base de bois étant de préférence pourvue d'éléments de connexion (10) au niveau des bords,
et une couche décorative (6) en papier et/ou en matière plastique qui présente une épaisseur de moins de 2 mm,
et en option une couche protectrice transparente (11) d'une épaisseur de moins de 1 mm.

15. Plaque de revêtement de sol selon la revendication 13 dans la forme de réalisation sous forme de plaque composite en matière plastique, en particulier sous forme de plaque en vinyle, qui présente une épaisseur totale de moins de 10 mm,
comportant une couche porteuse monocouche ou multicouche composée de ou en vinyle, qui présente une épaisseur de moins de 5 mm et
une couche décorative,
et en option une couche protectrice et/ou utile transparente composée de ou en vinyle,
la couche chauffante étant disposée sous la couche décorative, de préférence entre la couche porteuse et la couche décorative.
